# NEUE EUROPÄISCHE PATENTSCHRIFT

(11) **EP 1 838 778 B2**
(45) Veröffentlichungstag und Bekanntmachung des Hinweises auf die Entscheidung über den Einspruch: **18.07.2018**
(45) Hinweis auf die Patenterteilung: 19.11.2008
(21) Anmeldenummer: 05804996.6
(22) Anmeldetag: 20.12.2005
(51) Int. Cl.: C08L 21/00, C08L 9/00, C09D 109/00, C09D 121/00

(54) **SPRITZBARE, NIEDRIGVISKOSE KAUTSCHUK-DÄMPFUNGSMASSEN**
INJECTABLE, LOW-VISCOSITY RUBBER DAMPING COMPOUNDS
MATIERES D'AMORTISSEMENT CAOUTCHOUTEUSES, DE VISCOSITE REDUITE, PULVERISABLES

(30) Priorität: 22.01.2005 DE 102005003057
(43) Veröffentlichungstag der Anmeldung: 03.10.2007
(73) Patentinhaber: Henkel AG & Co. KGaA, 40589 Düsseldorf (DE)
(72) Erfinder: SAUER, Ralf, 68789 St. Leon-Rot (DE); BORN, Peter, 69207 Sandhausen (DE)
(86) Internationale Anmeldenummer: PCT/EP2005/013728
(87) Internationale Veröffentlichungsnummer: WO 2006/076958

(56) Entgegenhaltungen:
- EP-A- 0 524 058
- EP-A- 0 658 597
- EP-B1- 0 793 697
- WO-A-96/16136
- WO-A1-2004/065485
- JP-A- 4 036 371
- JP-A- 6 065 423
- JP-A- 7 292 125
- JP-A- 2002 047 467

## Beschreibung

Die Erfindung betrifft spritzbare, niedrigviskose Zusammensetzungen auf der Basis von natürlichen und/oder synthetischen, olefinischen Doppelbindungen enthaltenen Elastomeren (Kautschuken), die im vulkanisierten Zustand akustisch dämpfende Eigenschaften haben. Die Erfindung betrifft fernerhin die Verwendung der vorgenannten Zusammensetzungen als akustisch dämpfender ein- oder zweikomponentiger Klebstoff, Dichtstoff oder als Beschichtungsmasse sowie ein Verfahren zum Verbinden von Metallteilen und/oder Abdichten von Fugen zwischen Metallteilen und ein Verfahren zum Beschichten von Bauteilen mit diesen Zusammensetzungen.

Bei der Herstellung von Fahrzeugen, Maschinen und Geräten werden heutzutage fast ausschließlich sehr dünnwandige Bleche eingesetzt. Mechanisch sich bewegende Teile oder laufende Motoren versetzen diese dünnwandigen Bleche unvermeidbar in Schwingungen, die vielfach im Hörbereich des menschlichen Ohres sind. Diese Schwingungen werden in Form von Körperschall über das gesamte Fahrzeug bzw. die Maschine oder das Gerät fortgeleitet und können an entfernten Stellen in die Luft als störender Schall abgestrahlt werden. Zur Reduzierung der Schallabstrahlung und Körperschalldämpfung werden diese Bleche daher insbesondere im Automobilbau und bei der Herstellung von Haushaltsgeräten mit schalldämpfenden Belägen, sogenannten Antidröhnbeschichtungen, versehen.

Nach herkömmlicher Verfahrensweise werden dabei Mischungen aus Füllstoffen mit hohem spezifischen Gewicht und Bitumen zu Folien extrudiert, aus denen dann die entsprechenden Formteile gestanzt oder geschnitten werden. Anschließend werden diese Folien auf die betreffenden Blechteile geklebt, wobei sie ggf. noch unter Erwärmen an die Form des Bleches angepaßt werden müssen. Obwohl diese Bitumen-Folien aufgrund ihres geringen Materialpreises noch häufig Anwendung finden, sind sie sehr spröde und neigen insbesondere bei tiefen Temperaturen zum Abplatzen von Blech. Auch die vielfach vorgeschlagenen Zusätze von Elastomeren ergeben nur eine geringfügige Verbesserung, die für viele Anwendungen unzureichend ist. Des weiteren ist das Aufbringen der vorgeformten Bitumenteile auf kompliziert geformte oder schwer zugängliche Blechteile von Maschinen oder Fahrzeugen, z.B. die Innenflächen der Hohlräume von Kraftfahrzeugtüren, überhaupt nicht möglich. Als weiterer Nachteil kommt hinzu, dass für ein einziges Fahrzeug oder Gerät in vielen Fällen mehrere Stanzteile benötigt werden, wodurch eine aufwendige Lagerhaltung erforderlich ist.

Man hat daher versucht, mit anderen Polymersystemen die Nachteile der Bitumenfolien zu eliminieren. So wurden z.B. Füllstoffe enthaltende wässrige Polymerdispersionen von Polyvinylacetat oder Ethylen-Vinylacetat-Copolymeren entwickelt, die auf die Blechteile in der notwendigen Belagdicke aufgespritzt werden können. Diese Systeme sind jedoch für die industrielle Verwendung mit hohen Fertigungsstückzahlen nachteilig, da insbesondere bei größeren Belagdicken das Wasser nicht schnell genug aus der aufgespritzten Schicht entfernt werden kann. Ein weiterer Nachteil dieser konventionellen Methoden der Schalldämpfung besteht darin, daß diese Materialien nur dem einzigen Zweck der Schalldämpfung dienen.

Die EP-A-358598 oder die DE-A-3444863 beschreiben Plastisol- Formulierungen, die die Doppelfunktion eines Unterbodenschutzes (Schutz gegen Abrieb) und akustischer Dämpfung erfüllen. Die DE-A-4013318 beschreibt einen Zweischicht-Unterbodenschutz, der die Funktionen Unterbodenschutz und Absorption des Geräusches, das von einschlagenden Teilchen (Steinen, Splitt, Wasser usw.) herrührt, erfüllt.

EP 0766714 A beschreibt Plastisol-Zusammensetzungen auf der Basis von Vinylchlorid-Vinylacetat-Copolymeren, die nach dem Suspensions-Polymerisationsverfahren hergestellt wurden. Diese Plastisol-Zusammensetzungen haben selbst bei niedrigem Polymer-Weichmacher-Verhältnis eine niedrige Viskosität, so dass diese airless spritzbar sind und gut gelierfähig sind. Die Schrift offenbart weiterhin, das Beschichtungen auf Basis der genannten Plastisole gute geräuschdämpfende Wirkung zeigen. In dieser Schrift wird vorgeschlagen, diese Plastisole im Unterbodenbereich von Kraftfahrzeugen, einschließlich der Radkästen zur körperschalldämpfenden Beschichtung und zum Korrosionsschutz und Schutz vor Abrieb einzusetzen.

In ähnlicher Weise beschreibt die EP 702708 A schalldämpfende Beschichtungen für Bleche im Unterbodenbereich von Kraftfahrzeugen auf der Basis von Plastisolen bestehend aus 5 bis 60 Gew. % mindestens eines pulverförmigen Styrol-Copolymeren oder Methylmethacrylat-Homopolymeren oder Copolymeren des Methylmethacrylates, 5 bis 65 Gew. % Weichmacher, 0 bis 40 Gew. % Füllstoffe, 2 bis 40 Gew. % reaktiven Zusätzen und gegebenenfalls weiteren Zusatzstoffen. Nach dieser Schrift eignen sich die dort beschriebenen Plastisolformulierungen zur Herstellung abriebfester, einschichtiger, im Spritzverfahren aufbringbaren Belege auf Bleche, insbesondere im Unterbodenbereich von Kraftfahrzeugen zur Reduktion der durch Aufprallen der Teilchen hervorgerufenen Geräusche, zum Korrosionsschutz und zur Erzielung einer abriebfesten Beschichtung.

WO 96/16136 beschreibt einkomponentige, heißhärtende, reaktive Zusammensetzungen auf der Basis von Flüssigkautschuken mit reaktiven olefinischen Doppelbindungen sowie gegebenenfalls zugesetzten Kautschuken und Vulkanisationssystemen auf der Basis von Schwefel. Diese Zusammensetzungen haben im vulkanisierten Zustand hohe Maxima des akustischen Verlustfaktors im Gebrauchstemperaturbereich zwischen etwa +10°C und +40°C. Es wird weiter angegeben, dass diese Zusammensetzungen zusätzlich feinteilige thermoplastische Polymere enthalten können. Die Zusammensetzungen sollen zur Verwendung als akustisch dämpfender Klebstoff, Dichtstoff oder als Beschichtungsmasse eingesetzt werden. Gemäß der Offenbarung dieser Schrift werden die heißhärtenden, reaktiven Zusammensetzungen in Form einer extrudierten Folie, einer extrudierten Schnur oder eines extrudierten Bandes auf das zu beschichtende Bauteil aufgelegt, die Teile werden gegebenenfalls gefügt und anschließend erhitzt, um die Zusammensetzung auszuhärten.

WO 91/05819 beschreibt thermoplastische Massen zur Verwendung als schalldämpfende und vibrationsisolierende, laminierte oder Schichtkörper, insbesondere für Motorfahrzeuge. Die thermoplastischen Massen sollen 0,6 bis 50 % chloriertes Polyethylen, 20 bis 95 % Füllstoffe und 4 bis 60 % mit dem chlorierten Polyethylen verträglichen Weichmacher enthalten. Es wird angegeben, dass diese thermoplastischen Zusammensetzungen als Schichtmaterial in Motorfahrzeugen, Gebäuden, Haushaltsgeräten und industriellen Maschinen zur Schalldämpfung und Vibrationsisolation eingesetzt werden können.

EP 525769 A beschreibt härtbare Beschichtungszusammensetzungen enthaltend ein Oxyalkylenpolymer, das eine Silicium enthaltende Gruppe aufweist. Die silicium-haltige Gruppe soll Hydroxylgruppen oder hydrolysierbare Gruppen am Siliciumatom gebunden haben und soll unter Bildung einer Siloxanbindung vernetzbar sein. Gemäß dieser Schrift liefern derartige Beschichtungs-zusammensetzungen einen guten Beschichtungsfilm mit antikorrosiven Eigenschaften, Abriebfestigkeit und Vibrationsdämpfung, selbst wenn diese Beschichtungen bei tiefen Temperaturen ausgehärtet werden. Diese Beschichtungen sollen im Sprühverfahren gut applizierbar sein.

WO 93/15333 beschreibt ein Verfahren zur Dämpfung der Vibration eines vibrierenden festen Gegenstandes bei einer Temperatur zwischen -20°C und 200°C bei einer Vibrationsfrequenz von 1 Hz, durch Bereitstellung einer viskoelastischen Schichtanordnung mit mindestens einer Schicht enthaltend ein thermisch härtbares Epoxy-acrylat Harz.

WO 99/58597 beschreibt akustische Dämpfungszusammensetzungen enthaltend Plastisole auf Acrylatbasis und Recyclate aus Lackpolymerabfällen, die ungehärtete Harzbestandteile enthalten und somit zur einer chemischen Reaktion befähigt sind. Derartige Zusammensetzungen werden zur Herstellung von Beschichtungen von steifen Gegenständen vorgeschlagen, die die Tendenz zur Vibration aufweisen, wie metallische Automobilteile. Gemäß den Angaben in dieser Schrift unterdrücken derartige Beschichtungen mechanische Vibrationen und sie reduzieren die Geräusche, die von einschlagenden Teilchen, wie Splitt und Wasser auf die Fahrzeugkarosserie herrühren. Außerdem wird angegeben, dass diese Beschichtungen die Luftschall-Vibration in Hohlräumen reduziert.

In dem Bestreben, die Komplexität von Fahrzeugen, Maschinen und Geräten zu reduzieren und damit die Herstellkosten zu senken, besteht insbesondere in der Fahrzeugindustrie der Wunsch, schalldämpfende Materialien bereitzustellen, die möglichst im Rohbau der Fahrzeug-Herstellung automatisch mit Hilfe von Robotern gezielt appliziert werden können. Die aus dem obengenanten Dokument WO 96/16136 A bekannten heißhärtenden bzw. vulkanisierbaren Elastomerprodukte erfüllen die Forderung der Applizierbarkeit im Rohbau bereits in weiten Bereichen. Es besteht jedoch Verbesserungsbedarf im Hinblick auf eine leichtere Applizierbarkeit der Materialien. Wie aus dieser Schrift bekannten Elastomerprodukte müssen aufgrund ihrer sehr hohen Viskosität bei höheren Temperaturen applizierbar sein und sind nicht mit herkömmlichen Spritzeinrichtungen applizierbar.

Niedrigviskose Kautschukdämpfungsmassen auf der Basis von flüssigen Elastomeren, z.B. flüssigem Polyisobutylen oder Polyisopren, einem Vulkanisationssystem und Fasern, z.B. Nylonfasern, sind aus JP-A-4036371 bekannt. JP-A-2002-047467 beschreibt ebenfalls Kautschukdämpfungsmassen auf Basis von flüssigem Polyisopren, Haftvermittlern und Härtern.

EP-A-658597 offenbart Zusammensetzungen mit Dämpfungseigenschaften, die 3,4-Polyisopren und Gemische aus flüssigem und/oder festem Kautschuk und/oder fein verteilten Polymerpulvern sowie optional Weichmacher, Füller und andere konventionelle Rohmaterialien enthalten.

JP-A-06-065423 offenbart ein Schwingungsdämpfungssystem auf Basis von Polyamidelastomeren. Dieses kann beispielsweise für die Dämpfung von Erdbebenschwingungen in Gebäuden eingesetzt werden.

JP-A-07-292125 offenbart Schalldämpfungsmittel, die Fasern enthalten.

Es bestand also Bedarf, derartige Kautschukmassen bzw. Kautschukzusammensetzungen so weiter zu entwickeln, dass diese eine bei Raumtemperatur oder gegebenenfalls nur leicht erhöhter Temperatur eine ausreichend niedrige Viskosität aufweisen, dass sie mit den Spritzapplikationsgeräten des Standes der Technik gezielt in den Bereichen einer Kraftfahrzeug-Rohkarosserie applizierbar sind, in denen sie die höchste Effektivität in Bezug auf akustische Dämpfung bewirken.

Die erfindungsgemäße Lösung der Aufgabe ist den Patentansprüchen zu entnehmen. Sie besteht in der Hauptsache in der Bereitstellung von spritzbaren Kautschukdämpfungsmassen auf der Basis von natürlichen und/oder synthetischen olefinische Doppelbindungen enthaltenden Elastomeren und Vulkanisationsmitteln, die eine Viskosität bei 20°C von 1000 mPa·s bis 100.000 mPa.s gemessen nach DIN 53019 haben, wobei die Zusammensetzung
a) 5-50 Gew. % flüssige(s) Polyen(e) mit einem Molekulargewicht unter 20000,
b) ein Vulkanisationssystem ausgewählt aus der Gruppe, bestehend aus
   ■ Schwefel und einem oder mehreren organischen Beschleuniger(n) und Metalloxid(en),
   ■ peroxidischen Vulkanisationssystemen oder
   ■ Chinonen, Chinondioximen oder Dinitrosobenzol, ggf. in Kombination mit organischen Beschleunigern und/oder Metalloxid(en)
c) Kurzfasern mit einer mittleren Faserlänge von 50 µm bis 500 µm, vorzugsweise 100 µm bis 250 µm, wobei die Masse 0,5 bis 15 Gew. % Kurzfasern enthält,
d) ggf. weitere Zusätze ausgewählt aus der Gruppe gebildet durch
   ■ Thermoplastische Polymere in Form von feinzerteilten Pulvern,
   ■ Füllstoffe,
   ■ Leichtfüllstoffe,
   ■ Klebrigmacher und/oder Haftvermittler,
   ■ Extenderöle,
   ■ Alterungsschutzmittel,
   ■ Rheologiehilfsmittel, oder deren Mischungen,
   enthält, wobei die Summe der Bestandteile a) bis d) sich zu 100 Gew.-% addieren.

Als akustisch wirksame Dämpfung oder Schwingungsdämpfung im Sinne dieser Erfindung soll dabei die Körperschalldämpfung verstanden werden, diese bewirkt bekanntermaßen die Minderung des "Dröhnens" von Blechkonstruktionen.

Die Beurteilung der Wirksamkeit der akustischen Dämpfungseigenschaften der erfindungsgemäßen Zusammensetzungen erfolgt dabei nach dem Biegeschwingungsversuch gemäß Teil 3 der DIN 53440 ("Oberst-Methode"). Dazu werden Stahlbleche mit den erfindungsgemäßen Zusammensetzungen beschichtet, diese Beschichtung wird dann unter Temperaturbedingungen, wie sie z.B. im Fahrzeugbau zur Aushärtung der diversen Lacksysteme vorherrschen, d.h. im Bereich zwischen 130°C und 220°C, ausgehärtet. Der Biegeschwingungsversuch wird dann bei 200 Hz und verschiedenen Temperaturen durchgeführt, um eine wirksame akustische Dämpfungswirkung dieser Zusammensetzungen im "Gebrauchs-Temperaturbereich", d.h. zwischen ca. 0°C und +40°C beurteilen zu können. Als akustisch wirksam im Sinne dieser Erfindung sollen dabei alle heißhärtenden (vulkanisierbaren) Zusammensetzungen gelten, die im Biegeschwingungsversuch gemäß DIN 53440, Teil 3, eine extrem hohe Dämpfung, d.h. einen Verlustfaktor des beschichteten Blechstreifens d (combi) von > 0,1, vorzugsweise 0,2 oder mehr aufweisen.

"Flüssige Polyene" im Sinne dieser Erfindung sind dabei Flüssigkautschuke oder Elastomere. Sie können aus der folgenden Gruppe der Homo- und/oder Copolymeren ausgewählt werden:
Polybutadiene, insbesondere die 1,4- und 1,2-Polybutadiene, Polybutene, Polyisobutylene, 1,4-Polyisoprene, Styrol-Butadien-Copolymere, Butadien-Acrylnitril- Copolymere, wobei diese Polymeren endständige und/oder (statistisch verteilte) seitenständige funktionelle Gruppen haben können. Beispiele für derartige funktionelle Gruppen sind Hydroxy-, Carboxyl-, Carbonsäureanhydrid-oder Epoxygruppen. Das Molekulargewicht dieser Flüssigkautschuke ist typischerweise unterhalb von 20000, vorzugsweise zwischen 900 und 10000. Der Anteil an Flüssigkautschuk an der Gesamtzusammensetzung hängt dabei von der erwünschten Rheologie der ungehärteten Zusammensetzung und den erwünschten mechanischen und akustischen Dämpfungseigenschaften der ausgehärteten Zusammensetzung ab. Der Anteil an flüssigem Kautschuk oder Elastomer variiert normalerweise zwischen 5 und 50 Gew. % der Gesamtformulierung. Es können auch Mischungen verschiedener flüssiger Kautschuke oder Elastomere eingesetzt werden.

Der Zusatz von feinverteilten thermoplastischen Polymerpulvern kann eine Verbesserung der akustischen Dämpfung bewirken, wenn dieses thermoplastische Polymer eine Glasübergangstemperatur im Bereich zwischen 5°C und 50°C aufweist. Beispiele für geeignete thermoplastische Polymere sind Polypropylen, Polyethylen, thermoplastische Polyurethane, Methacrylatcopolymere, Styrolcopolymere, Polyvinylchlorid, Polyvinylacetal sowie insbesondere Polyvinylacetat und dessen Copolymere.

Die Füllstoffe können aus einer Vielzahl von Materialien ausgewählt werden, insbesondere sind hier zu nennen Kreiden, natürliche gemahlene oder gefällte Calciumcarbonate, Calcium-Magnesium-Carbonate, Silicate, Schwerspat sowie Ruß. Insbesondere sind auch blättchenförmige Füllstoffe, wie z.B. Vermiculit, Glimmer, Talk oder ähnliche Schichtsilikate geeignet. In einigen Formulierungen haben solche blättchenförmigen Füllstoffe die Wirkung der akustischen Dämpfung signifikant verbessert. Es kann ggf. zweckmäßig sein, daß zumindest ein Teil der Füllstoffe Oberflächen-vorbehandelt ist, insbesondere hat sich bei den verschiedenen Calciumcarbonaten bzw. Kreiden eine Beschichtung mit Stearinsäure als zweckmäßig erwiesen.
Zusätzlich zu den vorgenannten "normalen" Füllstoffen können die erfindungsgemäßen Zusammensetzungen sogenannte Leichtfüllstoffe enthalten, die ausgewählt werden aus der Gruppe der Glashohlkugeln, Flugasche (Fillite), Kunststoffhohlkugeln auf der Basis von Phenolharzen, Epoxidharzen oder Polyestern, keramischen Hohlkugeln oder organischen Leichtfüllstoffen natürlichen Ursprungs wie gemahlene Nußschalen, beispielsweise die Schalen von Cashewnüssen, Kokosnüssen oder Erdnußschalen sowie Korkmehl oder Kokspulver. Besonders bevorzugt werden dabei Leichtfüllstoffe auf der Basis von Mikrohohlkugeln, dies können die vorgenannten Glashohlkugeln oder aber auch die expandierbaren bzw. expandierten Kunststoffmikrohohlkugeln auf der Basis von Polyvinylidenchlorid-Copolymeren oder Acrylnitril-Copolymeren sein, letztere sind unter den Namen "Dualite" bzw. "Expancel" von den Firmen Pierce & Stevens bzw. Akzo Nobel im Handel erhältlich.
Der Gesamtanteil an Füllstoffen in der Formulierung kann zwischen 10 und 70 Gew.% variieren, der Vorzugsbereich liegt zwischen 25 und 60 Gew.%.

Als Klebrigmacher und/oder Haftvermittler können Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Polyepoxydharze, Anhydride und Anhydrid-gruppen enthaltende Copolymere eingesetzt werden. Art und Menge der Klebrigmacher bzw. Haftvermittler hängt von der Polymerzusammensetzung des Kleb-/Dichtstoffes bzw. der Beschichtungszusammensetzung ab, von der Festigkeit der gehärteten Zusammensetzung und von dem Substrat, auf welches die Zusammensetzung appliziert wird. Typische klebrigmachende Harze (Tackifier) wie z.B. die Terpenphenolharze oder Harzsäurederivate werden normalerweise in Konzentrationen zwischen 5 und 20 Gew.% verwendet, typische Haftvermittler wie Polyamine, Polyaminoamide oder Resorcinderivate werden im Bereich zwischen 0,1 und 10 Gew.% verwendet.

Vorzugsweise sind die erfindungsgemäßen Zusammensetzungen frei von Weichmachern, insbesondere Phthalsäureestern oder Extenderölen. Es kann jedoch notwendig sein, die Rheologie der ungehärteten Zusammensetzung und/oder die mechanischen Eigenschaften und/oder die akustische Dämpfung der gehärteten Zusammensetzungen durch die Zugabe von sog. Extenderölen, d.h. aliphatischen, aromatischen oder naphthenischen Ölen oder Citronensäureestern zu beeinflussen. Vorzugsweise geschieht dies jedoch durch die Zugabe von niedermolekularen Polybutenen, Polyisobutylenen oder durch die Verwendung von niedrigmolekularen Flüssigkautschuken. Falls Extenderöle eingesetzt werden, werden Mengen im Bereich zwischen 5 und 20 % verwendet.

Die geeigneten Härter bzw. Vulkanisationsmittel, Beschleuniger oder Katalysatoren hängen von den reaktiven und/oder funktionellen Gruppen der ausgewählten Polymeren ab. Für die Härtungsreaktion über die olefinischen Doppelbindungen (Vulkanisation) der flüssigen und/oder festen Kautschuke eignen sich radikalische Vulkanisationssysteme, insbesondere auf der Basis von organischen oder anorganischen Peroxiden, Vulkanisationssysteme auf der Basis von Schwefel, insbesondere in Kombination mit organischen Vulkanisationsbeschleunigern und ggf. Zinkverbindungen, es eignen sich jedoch auch Vulkanisationssysteme auf der Basis von Chinonen, Dioximen oder Dinitrosobenzol.

Besonders bevorzugt sind die Vulkanisationssysteme auf der Basis von pulverförmigem Schwefel, besonders in Kombination mit Vulkanisationsbeschleunigern wie z.B. Mercaptobenzothiazol, Dithiocarbamaten, Sulfenamiden, Disulfiden wie z.B. Dibenzothiazoldisulfid und/oder Thiuramdisulfide, Aldehyd-Amin-Beschleuniger, Guanidine und Metalloxide wie z.B. Zinkoxid. Zusätzlich können typische Kautschukvulkanisationshilfsmittel wie z.B. Fettsäuren (z.B. Stearinsäure) in der Formulierung vorhanden sein. Der Gehalt an Schwefel kann dabei in weiten Grenzen variierten, er kann bis zu 5 Gew.%, vorzugsweise bis etwa 10 Gew.% betragen, die Untergrenze sollte vorzugsweise nicht unter 0,5 Gew.% liegen. Dabei hängt der Gehalt an Schwefel von der Reaktivität der eingesetzten Flüssigkautschuke ab. Außerdem läßt sich über den Schwefelgehalt das Maximum des Verlustfaktors sowie der nutzbare Temperaturbereich eines ausreichend hohen Verlustfaktors beeinflussen. Der Gehalt an Vulkanisationsbeschleunigern kann zwischen 0 und etwa 10 Gew.% variieren. Auch der Gehalt an Metalloxiden liegt im Bereich zwischen 0 und 10 Gew.%.

Als schwefelfreie Vulkanisationssysteme eignen sich insbesondere Vulkanisationssysteme auf der Basis von p-Benzochinondioxim, wobei diese Zusammensetzungen zusätzlich die oben genannten Vulkanisationsbeschleuniger und/oder Metallverbindungen in den oben genannten Mengenbereichen enthalten können.

Gegen den thermischen, thermooxidativen oder Ozonabbau der erfindungsgemäßen Zusammensetzungen können konventionelle Stabilisatoren wie z.B. sterische gehinderte Phenole oder Aminderivate eingesetzt werden, typische Mengenbereiche für diese Stabilisatoren sind 0,1 bis 5 Gew.%.

Obwohl die Rheologie der erfindungsgemäßen Zusammensetzungen normalerweise durch die Auswahl der Füllstoffe und das Mengenverhältnis der niedermolekularen Flüssig-Kautschuke in den gewünschten Bereich gebracht werden kann, können konventionelle Rheologiehilfsmittel wie z.B. pyrogene Kieselsäuren oder Bentone im Bereich zwischen 0,1 und 7% eingesetzt werden. Außerdem können weitere konventionelle Hilfs- und Zusatzmittel in den erfindungsgemäßen Zusammensetzungen Verwendung finden.

Die Wirksamkeit der akustischen Dämpfung der erfindungsgemäßen Zusammensetzung kann auf die spezifischen Bedürfnisse der Anwendung in bezug auf die Lage des Maximums des Verlustfaktors sowie des Temperaturbereiches, in dem extrem hohe akustische Dämpfung bewirkt wird, beeinflußt werden. Die Haupteinflußfaktoren sind dabei das Vulkanisationssystem (Gehalt an Schwefel, Gehalt an Vulkanisationsbeschleuniger) und Gehalt und Reaktivität an Kautschuken, insbesondere der Flüssigkautschuke. Wie bereits ausgeführt, kann ein Zusatz von geeigneten von thermoplastischen Polymerpulvern sowohl das Maximum als auch den Temperaturbereich der wirksamen akustischen Dämpfung positiv beeinflussen.

Das alleinige Steuern der Temperaturbereiche des Maximus des akustischen Dämpfungsfaktors über die Vernetzungsdichte der Kautschuksysteme, wie es z.B. die EP 793697 (WO 96/16136) vorschlägt, ist zwar ein Weg zur Optimierung der akustischen Dämpfungswirkung, er lässt sich jedoch nicht immer im vollem Umfange verwirklichen, da mit hoher Vernetzungsdichte des Vulkanisates meist eine höhere Sprödigkeit der Beschichtung einhergeht. Auch eine Erhöhung der spezifischen Belagsgewichte ohne eine Erhöhung der Vernetzungsdichte bringt zwar eine Verbesserung der vibrationsdämpfenden Eigenschaften, jedoch wird hierdurch auch das Fahrzeuggewicht erhöht.

Die erfindungsgemäßen Kautschukdämpfungsmasse enthalten weiterhin strukturverstärkende Faserfüllstoffe auf der Basis von Aramidfasern, KohlenstoffFasern, Glasfasern, Polyamidfasern, Polyethylenfasern oder Polyesterfasern, wobei diese Fasern vorzugsweise Kurzfasern in Form von Pulpfasern oder Stapelfasern sind. Die Fasern sollen dabei besonders bevorzugt eine mittlere Faserlänge zwischen 100 µm und 250 µm haben und einen Durchmesser von 5 bis 20 µm. Die längsten Fasern sollen dabei 1000µm bis 2000µm nicht überschreiten. Besonders bevorzugt sind hierbei Glasfasern, Polyamidfasern vom Typ der Aramidfaser oder auch Polyesterfasern. Der Gehalt der Zusammensetzung an Fasern beträgt 0,5 bis 10 Gew.%.

Bis zu einem gewissen Grad kann auch die Auswahl der Art und Menge der übrigen Füllstoffe die akustischen Eigenschaften beeinflussen, hier hat sich gezeigt, daß insbesondere plättchenförmige Füllstoffe wie z.B. Glimmer einen vorteilhaften Einfluß auf den Verlustfaktor haben. Zusätzlich kann der Verlustfaktor durch die Dicke der Beschichtung beeinflußt werden. Geschäumte Materialien bewirken bekanntermaßen einen höheren Verlustfaktor, obwohl dies in solchen Fällen nicht anwendbar sein wird, in denen eine hohe Zugscherfestigkeit für den Klebstoff oder eine hohe mechanische Belastbarkeit der Beschichtung verlangt wird. In den meisten Anwendungsfällen ist es wünschenswert, daß das Maximum des Verlustfaktors etwa bei Raumtemperatur (etwa 20°C) liegt und daß der Bereich einer hohen Dämpfung (Verlustfaktor > 0,1) sich über einen möglichst breiten Temperaturbereich erstreckt. Die Härtungsbedingungen für die Kleb-/Dichtstoff- bzw. Beschichtungs-Zusammensetzungen gemäß dieser Erfindung können an die spezifische Applikation angepaßt werden. Wie eingangs erwähnt, ist ein bevorzugtes Anwendungsfeld der Rohbau in der Automobilindustrie, so daß die Härtung der Zusammensetzungen in einem Temperaturbereich zwischen 80°C und 240 °C in 10 bis 35 Min. stattfinden soll, vorzugsweise finden im Rohbau Temperaturen zwischen 160 und 200°C Verwendung. Ein entscheidender Vorteil der erfindungsgemäßen Zusammensetzungen gegenüber Plastisolen gemäß Stand der Technik ist ihre sogenannte "Wäscherbeständigkeit" unmittelbar nach dem Auftrag der Klebstoffe, d.h. sie bedürfen keiner Vorgelierung wie die Plastisole, um in den diversen Wasch- und Phosphatierungsbädern des Rohbaus beständig zu sein.

Gegenüber den meisten bisher bekannten heißhärtbaren Kautschukmassen für akustisch dämpfender Beschichtungen kann bei den Zusammensetzungen gemäß vorliegender Erfindung auf den Zusatz von Festkautschuken vollständig verzichtet werden. Dadurch ist es möglich, niedrigviskose, bei Raumtemperatur oder bei leicht erhöhter Temperatur durch applizierbare Kautschukdämpfungsmassen bereitzustellen, die im Rohbau der Automobilindustrie eingesetzt werden können.
Aufgrund ihrer niedrigen Viskosität können diese Zusammensetzungen mit herkömmlichen Pump-, Dosier-, Spritz- oder Extrusions-Einrichtungen für niederviskose, pastöse Materialien appliziert werden. Die besonders bevorzugten Anwendungsfelder sind dabei Innenbeschichtungen des Unterbodenbereiches. Die erfindungsgemäßen Kautschukdämpfungsmassen können wegen ihrer niedrigen Viskosität im Airless-, Air-assisted, Airmix- oder im sogenannten "Swirlspray-Verfahren" oder weiteren gängigen Sprühverfahren wie z.B. dem "Flat-Stream-Verfahren" angewendet werden.
Die erfindungsgemäßen Kautschukdämpfungsmassen haben dabei eine Viskosität bei 20°C von 1000 mPa·s bis 100.000 mPa·s gemessen nach DIN 53019. Vorzugsbereiche für die Viskosität sind:
bei 20°C: 15.000 - 80.000 und
bei 40°C: 5.000 - 20.000 mPa s.

Da die erfindungsgemäßen Kautschukdämpfungsmassen reproduzierbar in einem niedrigviskosen Bereich herstellbar sind und somit für gängige Spritz- bzw. Sprüh-Applikationen geeignet sind, können diese Zusammensetzungen auch besonders gezielt an den Stellen appliziert werden, wo sie die größte Dämpfungseffektivität bewirken. Ein derartiges Verfahren zum Ermitteln und gezielten Aufbringen von akustischen Dämpfungsmaterialien wird beispielsweise in der WO 02/12025 offenbart.
Die erfindungsgemäßen Massen mit dem Gehalt an strukturverstärkenden Faserfüllstoffen sind mit vollautomatischen Applikationsanlagen verarbeitbar, hierzu gehört insbesondere auch die Verarbeitung durch Schlitzdüsen nach dem sogenannten "Flat-Stream-Verfahren".

Die erfindungsgemäßen Zusammensetzungen können an sich in bekannter Weise in Mischaggregaten mit hoher Scherwirkung hergestellt werden, hierzu gehören, z.B. Kneter, Planetenmischer, Innenmischer, sogenannte "Banburrymischer", Doppelschneckenextruder und ähnliche dem Fachmann bekannte Mischaggregate.

Besonders bevorzugte erfindungsgemäße Kautschukdämpfungsmassen enthalten die folgenden Bestandteile:

| | |
|---|---|
| 0 - 10,0 % | Zinkoxid, |
| 0 - 10,0 % | Calciumoxid, |
| 0 - 2,0 % | 4-Methylphenol Reaktionsprodukt mit Dicyclopentadien und Isobutylen, |
| 5,0 - 30,0 % | Calciumcarbonat, gecoatet mit Stearat, |
| 5,0 - 50,0 % | gefälltes Calciumcarbonat, |
| 0,5 - 10,0 % | Schwefel, |
| 0,5 - 25,0 % | Graphit, |
| 0 - 2,0 % | Russ, |
| 0 - 2,0 % | Zinkdibenzyldithiocarbamat, |
| 0 - 4,0 % | MBTS (2,2'-Dibenzothiazyldisulfid ), |
| 0 - 10,0 % | Glashohlkugeln, |
| 0,5 - 10,0 % | Acetyltri-2-ethylhexyl-citrate, |
| 0,5 - 10,0 % | Glasfasern (mittlere Faserlänge von 100 - 250 µm, längste Faser von 1000 - 2000 µm), |
| 5,0 - 40,0 % | Polybutadien MG ca. 1000 ca. 40 -50% vinyl, |
| 2,0 - 10,0% | Polybutadien- mit aktiven Carboxylgruppen MW ca. 1700, |

wobei die Summe aller Bestandteile 100% ergibt.
In den nachfolgenden Ausführungsbeispielen soll die Erfindung näher erläutert werden, wobei die Auswahl der Beispiele keine Beschränkung des Umfanges des Erfindungsgegenstandes darstellen sollen.

### Beispiele

In einem evakuierbaren Laborkneter wurden die nachfolgend aufgeführten Zusammensetzungen gemäß Beispiel 1 und 2 unter Vakuum so lange gemischt, bis sie homogen waren. Falls nicht anders angegeben, sind alle Teile in den Beispielen Gewichtsteile.

### Akustische Dämpfungseigenschaften

1 mm dicke Federstahlstreifen der Abmessungen 240mm x 10mm wurden auf einem 200mm langen Abschnitt mit einer Schicht der Produkte aus den Beispielen 1 und 2 beschichtet, anschließend wurden die Beschichtungen 30 Min. bei 180°C ausgehärtet. Die Bestimmung des akustischen Dämpfungswertes (d-combi) erfolgte dabei nach dem Biegeschwingungsversuch der DIN 53440, Teil 3, bei 200 Hz. Dabei wurde auf ein Belaggewicht von 50% normiert, d.h., das Gewicht der Beschichtung mit dem akustisch dämpfenden Kleb-/Dichtstoff betrug 50% des Blechgewichtes.

### Beispiel 1:

| | |
|---|---|
| 2,49 % | Zinkoxid |
| 4,20 % | Calciumoxid |
| 0,50 % | 4-Methylphenol Reaktionsprodukt mit Dicyclopentadien und Isobutylen |
| 15,30 % | Calciumcarbonat, gecoatet mit Stearat |
| 15,41% | gefälltes Calciumcarbonat |
| 3,50 % | Schwefel |
| 17,50 % | Graphit |
| 0,50 % | Russ |

| | |
|---|---|
| 0,60 % | Zinkdibenyldithiocarbamat |
| 4,00 % | Glashohlkugeln |
| 4,00 % | technisches Weissöl |
| 4,00 % | Glasfasern (mittlere Faserlänge von 100 - 250 my u. längste Faser von 1000 -2000 my) |
| 22,00 % | Polybutadien MG ca. 1000 ca. 40-50% vinyl |
| 6,00 % | Polybutadien- mit aktiven Carboxylgruppen MW ca. 1700 |

### Beispiel 2:

| | |
|---|---|
| 2,49% | Zinkoxid |
| 4,20 % | Calciumoxid |
| 0,50 % | 4- Methylphenol Reaktionsprodukt mit Dicyclopentadien und Isobutylen |
| 12,80 % | Calciumcarbonat, gecoatet mit Stearat |
| 19,21 % | gefälltes Calciumcarbonat |
| 4,20 % | Schwefel |
| 15,00 % | Graphit |
| 0,50 % | Russ |
| 0,60 % | Zinkdibenyldithiocarbamat |
| 0,50 % | MBTS (2,2'-Dibenzothiazyldisulfid) |
| 4,00 % | Glashohlkugeln |
| 4,00 % | Acetyltri-2-ethylhexyl-citrate |
| 4,00 % | Glasfasern (mittlere Faserlänge von 100 - 250 my u. längste Faser von 1000 - 2000 my) |
| 22,00 % | Polybutadien MG ca. 1000 ca. 40 -50% vinyl |
| 6,00 % | Polybutadien- mit aktiven Carboxylgruppen MW ca. 1700 |

Das Ergebnis der akustischen Dämpfungsmessung nach dem Biegeschwingungsversuch gemäß DIN 53440, Teil 3, bei 200 Hz in Abhängigkeit von der Temperatur zeigt, dass die erfindungsgemäßen Kautschukdämpfungsmassen über den sehr breiten Temperaturbereich von etwa 0°C bis etwa 45°C einen akustischen Dämpfungswert (d-Kombi) von deutlich oberhalb 0,1 bei einem Belaggewicht von 50 % aufweisen. Dies ist eine deutliche Verbesserung gegenüber den bisher bekannten Kautschukmassen des Standes der Technik sowie anderen akustischen Dämpfungsbeschichtungen.

## Patentansprüche

1. Spritzbare Kautschukdämpfungsmasse auf der Basis von natürlichen und/oder synthetischen olefinische Doppelbindungen enthaltenden Elastomeren und Vulkanisationsmitteln, die eine Viskosität bei 20°C von 1000 mPa·s bis 100.000 mPa·s gemessen nach DIN 53019 hat, **dadurch gekennzeichnet, dass** die Zusammensetzung
a) 5-50 Gew. % flüssige(s) Polyen(e) mit einem Molekulargewicht unter 20000,
b) ein Vulkanisationssystem ausgewählt aus der Gruppe, bestehend aus
▪ Schwefel und einem oder mehreren organischen Beschleuniger(n) und Metalloxid(en),
▪ peroxidischen Vulkanisationssystemen oder
▪ Chinonen, Chinondioximen oder Dinitrosobenzol, ggf. in Kombination mit organischen Beschleunigern und/oder Metalloxid(en)
c) Kurzfasern mit einer mittleren Faserlänge von 50 µm bis 500 µm, vorzugsweise 100 µm bis 250 µm, wobei die Masse 0,5 bis 15 Gew. % Kurzfasern enthält,
d) ggf. weitere Zusätze ausgewählt aus der Gruppe gebildet durch
▪ Thermoplastische Polymere in Form von feinzerteilten Pulvern,
▪ Füllstoffe,
▪ Leichtfüllstoffe,
▪ Klebrigmacher und/oder Haftvermittler,
▪ Extenderöle,
▪ Alterungsschutzmittel,
▪ Rheologiehilfsmittel, oder deren Mischungen,
enthält, wobei die Summe der Bestandteile a) bis d) sich zu 100 Gew.-% addieren.

2. Kautschukdämpfungsmasse nach Anspruch 1, **dadurch gekennzeichnet, dass** mindestens ein flüssiges Polyen aus der Gruppe bestehend aus 1,2-Polybutadien, 1,4-Polybutadien, Polyisopren, Polybuten, Polyisobutylen, Copolymere des Butadiens und/oder Isoprens mit Styrol und/oder Acrylnitril, Copolymere von Acrylsäureestern mit Dienen ausgewählt ist, wobei das Molekulargewicht des flüssigen Polyens im Bereich von 900 bis 10000 liegt.

3. Kautschukdämpfungsmasse nach Anspruch 2, **dadurch gekennzeichnet, dass** mindestens ein flüssiges Polyen zusätzlich terminale und/oder statistisch verteilte Carboxylgruppen, Carbonsäureanhydridgruppen, Hydroxylgruppen, Aminogruppen, Mercaptogruppen oder Epoxygruppen als funktionelle Gruppen enthält.

4. Kautschukdämpfungsmasse nach mindestens einem der vorhergehenden Ansprüche, **dadurch gekennzeichnet, dass** sie zusätzlich ein thermoplastisches Polymer mit einer Glasübergangstemperatur zwischen 5 °C und 50°C enthält.

5. Kautschukdämpfungsmasse nach Anspruch 4, **dadurch gekennzeichnet, dass** das thermoplastische Polymer olefinische Doppelbindungen, Hydroxylgruppen, Carboxylgruppen, Epoxygruppen, Aminogruppen und/oder Mercaptogruppen als funktionelle Gruppen enthält.

6. Kautschukdämpfungsmasse nach mindestens einem der vorhergehenden Ansprüche, **dadurch gekennzeichnet, dass** die Kurzfasern aus Polyesterfasern, Polypropylenfasern, Polyamidfasern, Kohlenstofffasern, Glasfasern oder deren Kombination ausgewählt werden.

7. Kautschukdämpfungsmasse nach mindestens einem der vorhergehenden Ansprüche **gekennzeichnet durch** eine Viskosität von 1000 mPas bis 100.000 mPa·s gemessen nach DIN 53019 bei 20°C.

8. Kautschukdämpfungsmasse nach mindestens einem der vorhergehenden Ansprüche, **dadurch gekennzeichnet, dass** die Masse 0,5 bis 5 Gew. % Kurzfasern enthält.

9. Herstellung der Kautschukdämpfungsmasse nach mindestens einem der vorhergehenden Ansprüche durch Mischen der Komponenten unter hoher Scherung.

10. Verwendung der Zusammensetzung nach mindestens einem der vorhergehenden Ansprüche als akustisch dämpfenden ein- oder zweikomponentigen Klebstoff, Dichtstoff oder Beschichtungsmasse.

11. Verfahren zum Verbinden von Metallteilen und/oder Abdichten von Fugen zwischen Metallteilen, **dadurch gekennzeichnet, dass**
- zumindest eine Oberfläche eines Teils mit der Masse nach mindestens einem der vorhergehenden Ansprüche 1 bis 8 beschichtet wird,
- die zu verbindenden Teile zusammengefügt werden,
- und die gefügten Teile, ggf. unter mechanischer Fixierung, erhitzt werden, um die reaktive Zusammensetzung auszuhärten.

12. Verfahren zum Beschichten von Bauteilen durch Aufsprühen von Massen gemäß mindestens einem der Ansprüche 1 bis 8 auf die Oberfläche des Teils und Erhitzen des beschichteten Teils zum Aushärten der Masse.

13. Verfahren zum Beschichten von Bauteilen, **dadurch gekennzeichnet, dass** eine Kautschukdämpfungsmasse gemäß mindestens einem der Ansprüche 1 bis 8 in Airless-, Air-assisted, Airmix- Spritzverfahren oder Flat-Stream-Verfahren auf das Substrat aufgespritzt wird.

## Claims

1. A sprayable rubber damping compound based on natural and/or synthetic elastomers containing olefinic double bonds, and vulcanization agents, the compound having a viscosity from 1000 mPa·s to 100,000 mPa·s, measured according to DIN 53019 at 20 °C, **characterized in that** the composition contains
a) 5-50 wt.% liquid polyene(s) having a molecular weight below 20,000,
b) a vulcanization system selected from the group made up of
▪ sulfur and one or more organic accelerator(s) and metal oxide(s),
▪ peroxide vulcanization systems, or
▪ quinones, quinone dioximes, or dinitrosobenzene, if applicable in combination with organic accelerators and/or metal oxide(s)
c) short fibers having an average fiber length of from 50 µm to 500 µm, preferably from 100 µm to 250 µm), the compound containing 0.5 to 15 wt.% short fibers,
d) if applicable, further additives selected from the group formed by
▪ thermoplastic polymers in the form of finely comminuted powders,
▪ fillers,
▪ lightweight fillers,
▪ tackifying agents and/or adhesion promoters,
▪ extender oils,
▪ anti-ageing agents,
▪ rheology adjuvants, or mixtures thereof,
the sum of constituents a) to d) adding up to 100 wt.%.

2. The rubber damping compound according to claim 1, **characterized in that** at least one liquid polyene is selected from the group made up of 1,2-polybutadiene, 1,4-polybutadiene, polyisoprene, polybutene, polyisobutylene, copolymers of butadiene and/or isoprene with styrene and/or acrylonitrile, and copolymers of acrylic acid esters with dienes, the molecular weight of the liquid polyene being in the range of from 900 to 10,000.

3. The rubber damping compound according to claim 2, **characterized in that** at least one liquid polyene additionally contains terminal and/or randomly distributed carboxyl groups, carboxylic acid anhydride groups, hydroxyl groups, amino groups, mercapto groups or epoxy groups as functional groups.

4. The rubber damping compound according to at least one of the preceding claims, **characterized in that** it additionally contains a thermoplastic polymer having a glass transition temperature of between 5 °C and 50 °C.

5. The rubber damping compound according to claim 4, **characterized in that** the thermoplastic polymer contains olefinic double bonds, hydroxyl groups, carboxyl groups, epoxy groups, amino groups and/or mercapto groups as functional groups.

6. The rubber damping compound according to at least one of the preceding claims, **characterized in that** the short fibers are selected from polyester fibers, polypropylene fibers, polyamide fibers, carbon fibers, glass fibers, or combinations thereof.

7. The rubber damping compound according to at least one of the preceding claims, **characterized by** a viscosity of 1000 mPa·s to 100,000 mPa·s, measured according to DIN 53019 at 20 °C.

8. The rubber damping compound according to at least one of the preceding claims, **characterized in that** the compound contains 0.5 to 5 wt.% short fibers.

9. The manufacture of the rubber damping compound according to at least one of the preceding claims by mixing the components under high shear.

10. The use of the composition according to at least one of the preceding claims as an acoustic damping one- or two-component adhesive, sealant or coating compound.

11. A method for joining metal parts and/or for sealing joints between metal parts, **characterized in that**
- at least one surface of a part is coated with the compound according to at least one of the preceding claims 1 to 8,
- the parts to be joined are fitted together, and
- the fitted parts are heated, if applicable with mechanical immobilization, in order to cure the reactive composition.

12. A method for coating components by spraying compounds according to at least one of claims 1 to 8 onto the surface of the part and heating the coated part in order to cure the compound.

13. The method for coating components, **characterized in that** a rubber damping compound according to at least one of claims 1 to 8 is sprayed onto the substrate using an airless, air-assisted, air-mix spray method or flat stream method.

## Revendications

1. Masse d'amortissement caoutchouteuse pulvérisable, à base d'élastomères naturels et/ou synthétiques, contenant des doubles liaisons oléfiniques, et d'agents de vulcanisation, qui présente une viscosité à 20 °C de 1000 mPa•s à 100 000 mPa•s, mesurée selon la norme DIN 53019, **caractérisée en ce que** la composition contient
a) de 5 à 50 % en poids de polyène(s) liquide(s) présentant un poids moléculaire inférieur à 20 000,
b) un système de vulcanisation choisi dans le groupe constitué par
▪ le soufre et un ou plusieurs accélérateurs organiques et oxydes métalliques,
▪ les systèmes de vulcanisation peroxydes ou
▪ les quinones, les quinonedioximes ou le dinitrosobenzène, le cas échéant en combinaison avec des accélérateurs organiques et/ou un ou plusieurs oxydes métalliques
c) des fibres courtes présentant une longueur moyenne des fibres de 50 µm à 500 µm, de préférence de 100 µm à 250 µm, la masse contenant 0,5 à 15 % en poids de fibres courtes,
d) éventuellement d'autres additifs choisis dans le groupe formé par
▪ les polymères thermoplastiques sous forme de poudres finement divisées,
▪ les charges,
▪ les charges légères,
▪ les agents qui rendent adhésif et/ou les promoteurs d'adhérence,
▪ les huiles de dilution,
▪ les agents de protection contre le vieillissement,
▪ les adjuvants de rhéologie, ou leurs mélanges,
la somme des composants a) à d) s'additionnant jusqu'à 100% en poids.

2. Masse d'amortissement caoutchouteuse selon la revendication 1, **caractérisée en ce qu'**au moins un polyène liquide est choisi dans le groupe constitué par le 1,2-polybutadiène, le 1,4-polybutadiène, le polyisoprène, le polybutène, le polyisobutylène, les copolymères du butadiène et/ou de l'isoprène avec du styrène et/ou de l'acrylonitrile, les copolymères d'esters de l'acide acrylique avec des diènes, le poids moléculaire du polyène liquide étant situé dans la plage de 900 à 10 000.

3. Masse d'amortissement caoutchouteuse selon la revendication 2, **caractérisée en ce qu'**au moins un polyène liquide contient en outre des groupes carboxyle, anhydride d'acide carboxylique, hydroxyle, amino, mercapto ou époxy terminaux et/ou répartis statistiquement comme groupes fonctionnels.

4. Masse d'amortissement caoutchouteuse selon au moins l'une des revendications précédentes, **caractérisée en ce qu'**elle contient en outre un polymère thermoplastique présentant une température de transition vitreuse entre 5 °C et 50 °C.

5. Masse d'amortissement caoutchouteuse selon la revendication 4, **caractérisée en ce que** le polymère thermoplastique contient des doubles liaisons oléfiniques, des groupes hydroxyle, carboxyle, époxy, amino et/ou mercapto comme groupes fonctionnels.

6. Masse d'amortissement caoutchouteuse selon au moins l'une des revendications précédentes, **caractérisée en ce que** les fibres courtes sont choisies parmi les fibres de polyester, de polypropylène, de polyamide, de carbone, de verre ou leur combinaison.

7. Masse d'amortissement caoutchouteuse selon au moins l'une des revendications précédentes, **caractérisée par** une viscosité de 1000 mPa•s à 100 000 mPa•s, mesurée selon la norme DIN 53019 à 20 °C.

8. Masse d'amortissement caoutchouteuse selon au moins l'une des revendications précédentes, **caractérisée en ce que** la masse contient de 0,5 à 5 % en poids de fibres courtes.

9. Préparation de la masse d'amortissement caoutchouteuse selon au moins l'une quelconque des revendications précédentes par mélange des composants avec un cisaillement élevé.

10. Utilisation de la composition selon au moins l'une quelconque des revendications précédentes comme adhésif, masse d'étanchéité ou masse de revêtement à un ou deux composants à effet d'amortissement acoustique.

11. Procédé pour assembler des pièces métalliques et/ou colmater des joints entre des pièces métalliques, **caractérisé en ce que**
- au moins une surface d'une pièce est revêtue par la masse selon au moins l'une des revendications précédentes 1 à 8,
- les pièces à joindre sont assemblées,
- et les pièces assemblées sont chauffées, le cas échant avec une fixation mécanique, pour durcir la composition réactive.

12. Procédé pour le revêtement de pièces par pulvérisation de masses selon au moins l'une quelconque des revendications 1 à 8 sur la surface de la pièce et le chauffage de la pièce revêtue pour le durcissement de la masse.

13. Procédé de revêtement de pièces, **caractérisé en ce qu'**une masse d'amortissement caoutchouteuse selon au moins l'une quelconque des revendications 1 à 8 est pulvérisée sur le substrat dans un procédé de pulvérisation Airless, Air-assisted, Airmix ou dans un procédé Flat-Stream.
